# EUROPEAN PATENT SPECIFICATION

(11) **EP 4 366 517 B1**
(45) Date of publication and mention of the grant of the patent: **07.05.2025**
(21) Application number: 22726306.8
(22) Date of filing: 16.05.2022
(51) Int. Cl.: A01K 23/00

(54) **DEVICE FOR COLLECTING ANIMAL EXCREMENT**
VORRICHTUNG ZUM SAMMELN VON TIERKOT
DISPOSITIF DE COLLECTE DES DÉJECTIONS D'ANIMAUX

(30) Priority: 06.07.2021 IT 202100017720
(43) Date of publication of application: 15.05.2024
(73) Proprietor: RABDO' SRLS, 20026 Novate Milanese (MI) (IT)
(72) Inventor: BELOTTI, Pietro, 20026 Novate Milanese (MILANO) (IT)
(74) Representative: Bellomia, Paolo
(86) International application number: PCT/IB2022/054531
(87) International publication number: WO 2023/281327

(56) References cited:
- DE-A1- 3 809 286
- TW-U- M 609 151
- US-A- 3 786 780
- US-A- 3 819 220
- US-B1- 10 455 812

## Description

### FIELD OF APPLICATION

The present invention relates to a device for collecting animal waste, in particular for collecting dog waste.

The present invention relates to the field of devices adapted to help keep public and private places clean, more in particular to the field of devices for recovering animal feces, typically that of dogs, to keep places, such as streets, sidewalks, yards, gardens, parks, beaches, etc., clean.

Hereafter in the following description, reference will be made, by way of example, to a device for collecting dog feces, without the invention having to lose generality because of this.

### PRIOR ART

Sidewalks, roads and other public places fouled by the presence of dog excrement is a very serious problem in many countries. Often the presence of dog feces in the aforesaid places is due not only to the circulation of stray animals but also to the bad behavior of many pet owners who do not care to collect and eliminate their dog's feces although they could do so to solve the aforesaid problem. Despite the installation of free bag dispensers in the dog areas, and although various devices to facilitate dog owners removing their pet's feces have been made and marketed in recent years, there are still countless uncaring people who do not employ them.

Furthermore, studies have shown that dog feces are weighing significantly on pollution and they are contaminating the environment and endangering human health. Indeed, dog feces contain bacteria and pathogens that are dangerous to people. In particular, these are very dangerous microorganisms responsible for diseases, such as salmonella, toxoplasmosis and parasitic infections of the digestive system.

The solutions commonly used to date for collecting dog feces involve the use of scoops and tongs or the direct collection with the hands protected by a bag (which is then turned inside out to become the container).

However, the Applicant has noticed that the known solutions evidently force the user to bend over for collection, resulting in discomfort for some people with reduced mobility.

Furthermore, the unpleasant visual-olfactory closeness with the feces being collected often discourages many people from bending over to pick them up. Finally, tongs and scoops are often bulky, inconvenient to carry and unhygienic.

The Applicant has also observed how often excessively liquid feces, or feces deposited among pebbles or in tall grass, are not collected even by those people who usually collect their dog's feces because they are difficult to collect completely.

Finally, there are "clips" to be attached to the dog's tail close to the anus with an attached bag adapted to contain the feces, but, as easily imaginable, dogs do not like the pinching or having a strange object attached to their tail and tends to get rid of it swiftly.

Examples of known pet excrement catcher are disclosed in US10455812B1, US3819220A and TWM609151U.

In this context, the technical task underlying the present invention is to suggest a device for collecting animal waste which overcomes the drawbacks of the prior art mentioned above.

In particular, it is an object of the present invention to make available a device for collecting animal waste which is particularly convenient and practical in use and which makes it possible to significantly reduce the olfactory and visual closeness with the feces during collection.

It is a further object of the present invention to suggest a device for collecting animal waste which avoids manual collection of the waste and the need to bend over.

Finally, it is an object of the present invention to suggest a device for collecting animal waste which is versatile in use by allowing collection at any type of surface.

### SUMMARY OF THE INVENTION

The technical task and the specified objects are substantially achieved by a device for collecting animal waste comprising the technical features illustrated in one or more of the appended claims.

In particular, in a first aspect, the present invention provides a device for collecting animal waste according to claim 1, comprising a linear extension kinematic mechanism, an actuating handle, means for retaining a bag adapted to receive the animal waste, and a mechanism for opening and closing the bag.

The linearly extending kinematic mechanism extends between a first end portion and a second end portion opposite to each other and configured to move between a retracted configuration, in which the first end portion and the second end portion are in a proximal position, and an extended configuration, in which the first end portion and the second end portion are in a distal position.

The actuating handle is connected to the first end portion of the linear extension kinematic mechanism and configured to actuate the linearly extending kinematic mechanism reversibly between the retracted configuration and the extended configuration, and vice versa.

The linearly extending kinematic mechanism being configured to arrange, in the extended configuration, the retaining means at the animal's anal area so that the bag can receive the animal waste.

In other words, when the linear extension kinematic mechanism is operated in an extended configuration, the retaining means can be arranged under the dog's tail to collect the waste before it touches the ground, thus avoiding fouling and collecting the feces regardless of the texture and type of surface below.

The linearly extending kinematic mechanism comprises a sequence of arms hinged to one another and being mutually rotatable to implement a pantograph-type mechanism.

The bag opening and closing mechanism is interposed between the second end portion of the linear extension kinematic mechanism and the retaining means and is configured to reversibly switch the retaining means between a resting configuration, in which the bag is substantially closed during the retracted configuration of the linear extension kinematic, and an operating configuration, in which the bag is open during the extended configuration of the linear extension kinematic mechanism.

In other words, the bag opening and closing mechanism allows the bag to be opened automatically when the linear extension kinematic mechanism has been actuated in extension and the retaining means have thus been arranged under the dog's tail, and to close the bag again either during or at the end of the retraction of the linear extension kinematic mechanism (and thus of the retaining means) to retrieve the closed bag containing the feces.

In this manner, by virtue of the present invention, it is advantageously possible to avoid handling the feces and significantly reduce the olfactory and visual closeness therewith, because the bag returns to the user with the flaps pulled together, facilitating its correct elimination (it will be sufficient, for example, to tie a knot and throw it away in an appropriate bin).

Furthermore, the use of the device of the present invention prevents the waste from ending up on the ground.

By virtue of the device of the present invention, it is no longer necessary to bend over to pick up dog waste. This aspect is very important for several reasons. First of all, it facilitates the collection for people with motor difficulties, and then it avoids any contact of the waste with the ground.

The user can control the extension of the kinematic mechanism and consequently the opening of the bag to intercept the dog's feces before they drop onto the ground by simply acting on the actuating handle. Indeed, owners know their dog and understand when the dog is about to defecate, at that moment it is possible to act quickly to collect the suspended feces by simply activating the extension of the kinematic mechanism and the opening of the retaining means. Once the waste has been collected, it is possible to recall the closed bag with the collected waste inside by simply operating the kinematic mechanism and the retaining means again.

According to a further aspect of the present invention, a kit in accordance with claim 10 is further provided for collecting animal waste, comprising a device according to the present invention and at least one bag made of biodegradable or compostable material comprising a coupling portion configured to be coupled to the retaining means of the device.

By virtue of this kit, it is sufficient to take along the device and a biodegradable or compostable bag when one goes out with their dog to have a practical, clean and efficient collection kit.

Advantageously, by virtue of the use of this device, it is possible to use bags made of biodegradable or compostable material without the risk of breakage. Indeed, plastic bags are currently used for the collection of animal waste because they are more resistant during the step of recovery of the feces from the ground (just think to the risk of piercing the bag with one's nails or in tall grass, or with debris and small stones on more gravelly or degraded soils); now, instead, it is not necessary to handle the bag against the ground but simply throw it away (preferably after knotting it).

The dependent claims, incorporated herein by reference, correspond to different embodiments of the invention.

Further features and advantages of the present invention will be more apparent in the following indicative and consequently non-limiting description of a preferred but not exclusive embodiment of a device for collecting animal waste, as shown in the accompanying drawings.

### BRIEF DESCRIPTION OF THE DRAWINGS

Figure 1 is a diagrammatic perspective view of a device for collecting animal waste according to the present invention, in an extended configuration during use.
Figure 2 is a diagrammatic perspective view of the device in figure 1, in a retracted configuration.
Figure 3 shows the sequence of use of the device in figure 1.
Figure 4 is a diagrammatic perspective view of the device in figure 1 provided with a transport accessory.

### DETAILED DESCRIPTION

With reference to the accompanying figures, a device for collecting animal waste is indicated by reference numeral 1 as a whole, henceforth named device 1 for the sake of simplicity of description.

The device 1 comprises a linear extension kinematic mechanism 2 extending between a first end portion 2a and a second end portion 2b, mutually opposed to one another.

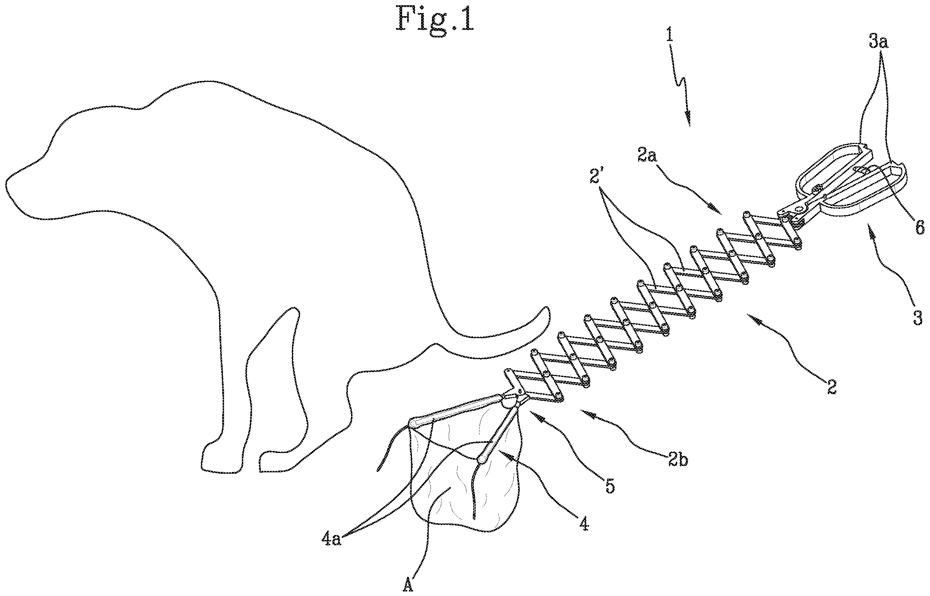

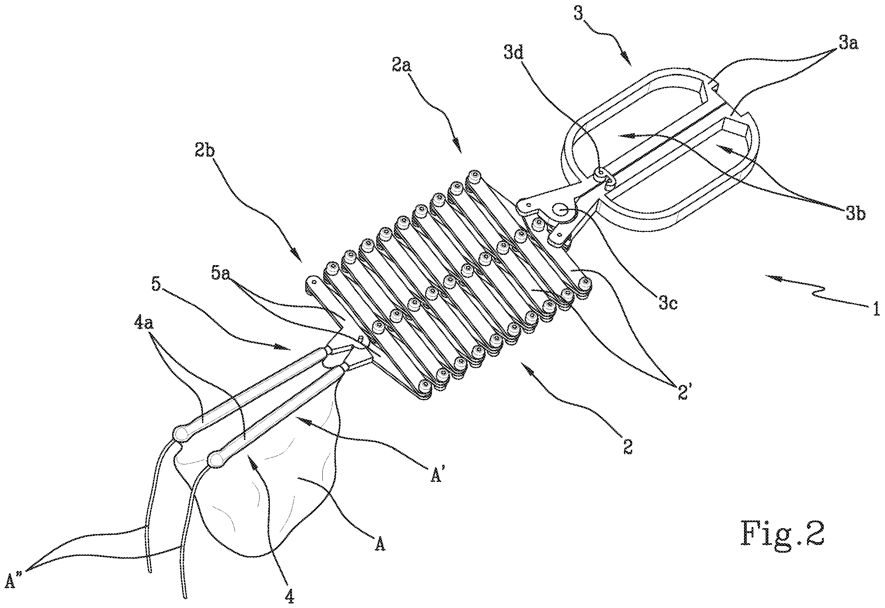

The kinematic mechanism 2 is configured to move between a retracted configuration (figure 2), in which the first terminal portion 2a and the second terminal portion 2b are in a proximal position, and an extended configuration (figure 1), in which the first terminal portion 2a and the second terminal portion 2b are in a distal position.

With reference to the embodiment shown in the accompanying figures, the kinematic mechanism 2 advantageously comprises a sequence of arms 2' hinged to one another and being mutually rotatable to implement a pantograph-type mechanism.

In other words, the arms 2' in the retracted configuration are substantially aligned while in the extended configuration the inclination angle between two consecutive arms 2' increases thus determining the elongation of the kinematic mechanism.

Preferably, the first end portion 2a and the second end portion 2b are arranged at a minimum distance having a value comprised between 8 cm and 30 cm, even more preferably equal to 26 cm, in the retracted configuration.

Preferably, the first end portion 2a and the second end portion 2b are arranged at a maximum distance having a value comprised between 65 cm and 95 cm, even more preferably equal to 82 cm, in the extended configuration.

Such maximum and minimum distance values advantageously allow the device 1 to occupy little space in the retracted configuration and to allow the collection of animal waste without needing to bend over in the extended configuration, as explained in greater detail below.

In the illustrated figures, the extension path of the kinematic mechanism 2 is substantially straight, however, it is within the inventive concept of the invention to implement a kinematic mechanism 2 which has a curvilinear path.

It is worth noting that, according to an embodiment of the present invention not shown in the accompanying figures, the kinematic mechanism 2 may also be of a telescopic type.

Furthermore, the device 1 preferably comprises an actuating handle 3 connected to the first end portion 2a and configured to actuate the kinematic mechanism 2 reversibly between the retracted configuration and the extended configuration, and vice versa.

In other words, the actuating handle 3 defines the gripping element with which the user grasps and controls the actuation of the device 1.

In particular, the actuating handle 3 comprises two gripping portions 3a hinged to each other and that can be spaced apart to switch the kinematic mechanism 2 between the retracted configuration and the extended configuration and that can be approached to switch the kinematic mechanism 2 between the extended configuration and the retracted configuration.

Preferably, as clearly illustrated in the embodiment shown in the appended figures, the gripping portions 3a can be grasped by inserting one's fingers into the respective slots 3b defining a scissor-like device.

The device 1 then comprises retaining means 4 configured to retain a bag adapted to receive the animal waste.

The kinematic mechanism 2 is configured to arrange, in the extended configuration, the retaining means 4 at an anal area of the animal (as illustrated in figure 1) so that the bag A can receive the animal's waste.

In other words, the bag A is arranged under the dog's bottom to collect the waste before they touch the ground.

The device 1 further comprises an opening and closing mechanism 5 of the bag A interposed between the second end portion 2b of the kinematic mechanism 2 and the retaining means 4.

The mechanism 5 is configured to reversibly switch the retaining means 4 between a resting configuration, in which the bag A is substantially closed during the retracted configuration of the kinematic mechanism 2, and an operating configuration, in which the bag A is open during the extended configuration of the kinematic mechanism A.

Therefore, by virtue of the present invention, the user does not have to manually open the bag A and collect the waste by hand, but the device 1, after having been coupled with a bag A (as will be more apparent below), automatically opens the bag A for collection and closes it at the end of the collection.

Preferably, the retaining means 4 comprise two rods 4a, connected to the opening and closing mechanism 5, which can be mutually spaced apart to implement the operating configuration and mutually approached to implement the resting configuration, said bag being adapted to be fitted onto said rods 4a.

Preferably, the two rods 4a are made of flexible material to facilitate the fitting of the bag A.

Preferably, the two rods 4a are arranged parallel in the resting configuration of the mechanism 5 and retracted configuration of the kinematic mechanism 2, to facilitate fitting the bag A and keeping it substantially closed before and after collecting the waste.

Furthermore, the mechanism 5 preferably comprises two arms 5a hinged and connected, on one side, to the two rods 4a of the retaining means 4, and on the other side, to the sequence of arms 2' of the kinematic mechanism 2, respectively.

Advantageously, the actuating handle 3, the kinematic mechanism 2, the mechanism 5 and the retaining means 4 are thus mechanically connected to each other so that by operating the actuating handle 3, it is possible to switch the device 1 in the different configurations in practical and efficient manner.

Preferably, the actuating handle 3 comprises a spring 6 configured to oppose the separation of the two gripping portions 3a and to approach again the two gripping portions 3a to each other.

In other words, by inserting the thumb into one slot 3b and at least the index finger into the other slot 3b, it is necessary to impart a force sufficient to move the two fingers apart to determine the switching from the retracted to the extended configuration of the kinematic mechanism 2 and from the resting configuration to the operating configuration of the mechanism 5, thereby preventing unintentional actuation.

On the contrary, to pass from the extended-operating configuration to the retracted-resting configuration, it is sufficient to accompany the return movement of the spring 6 by relieving the opening force of the two gripping portions 3a.

Advantageously, the presence of the spring 6 facilitates the actuating operations of the kinematic mechanism 2 and of mechanism 5, in particular facilitating the return of the bag A towards the user (which will be heavier after collection).

With reference to figure 1, the spring 6 is preferably either interposed to connect the two gripping portions 3a or is a torsional type spring (not shown) arranged at a connecting hinge 3c of the two gripping portions 3a.

Preferably, the actuating handle 3 comprises a safety hook 3d (clearly visible in figure 2) which is reversibly switchable between a locking position, in which it prevents the mutual separation of the two gripping portions 3a (figure 2), and an unlocking position, in which the separation and approach of the two gripping portions 3a (figure 1) are allowed.

Advantageously, the safety hook 3d prevents the unintentional activation of the actuating handle 3.

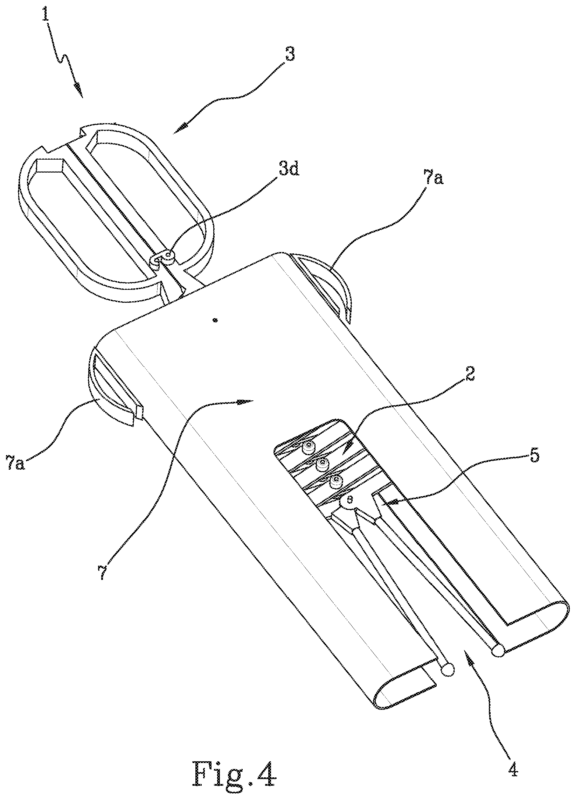

With reference to figure 4, the device 1 preferably comprises a case 7 adapted to receive within it at least the kinematic mechanism 2 in the retracted configuration, the mechanism 5 and the retaining means 4 in the resting configuration, during a transport configuration of the device 1.

In particular, the case 7 has externally at least one hooking element 7a configured to hook the device 1 to a garment or leash (not shown) to facilitate transportation.

According to a further aspect of the present invention, a kit 100 for collecting animal waste is further provided, comprising the device 1 according to the description and at least one bag A made of biodegradable or compostable material.

In particular, the bag A comprises a coupling portion A' configured to be coupled with the retaining means 4 of the device 1, preferably with the two rods 4a.

Preferably, said coupling portion A' is defined by an open channel on two sides of the bag A, obtained by turning up a portion of the edge of the bag A itself, defining a passage for inserting the two rods 4a.

Preferably, the bag A comprises a lanyard A" inserted within the coupling portion A' and graspable at both ends to allow convenient removal of the bag A from the two rods 4a and quick and convenient closing of the bag A after collecting the waste.

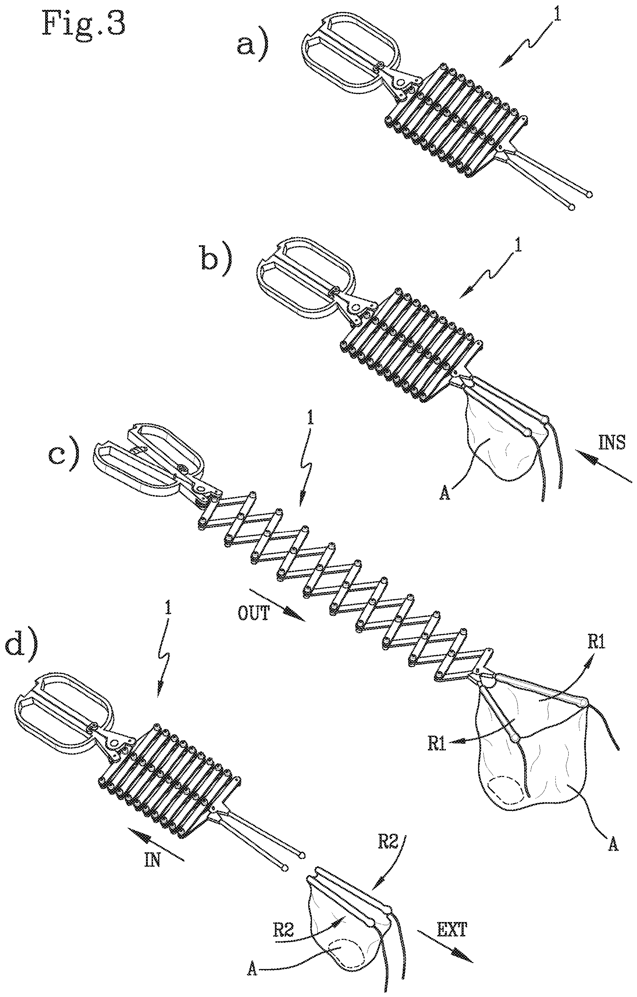

Figure 3 shows the device 1 and kit 100 according to the present invention of the present invention during various steps of use, specifically:
a) the kinematic mechanism 2 is in a retracted configuration and the retaining means are in a resting configuration,
b) a bag A is fitted over the retaining means 4 of the device 1, in particular by inserting the two rods 4a into the coupling portion A' of the bag A (along the insertion direction indicated by the arrow INS),
c) the gripping portions 3a are actuated away to accomplish the switching of the kinematic mechanism 2 from the retracted configuration to the extended one while switching the retaining means 4 from the resting configuration to the operating one by means of the mechanism 5 at the same time. The device 1 increases in extension (extending along the direction indicated by the arrow OUT), the two rods 4a move away (rotating in the direction indicated by the arrows R1) and the bag A opens (at the dog's anal area, to collect the dropping feces),
d) the gripping portions 3a are actuated in approach to accomplish the switching of the kinematic mechanism 2 from the extended configuration to the retracted configuration while switching the retaining means 4 from the operating configuration to the resting configuration by means of the mechanism 5 at the same time. The device 1 decreases its extension (shortening along the direction indicated by the arrow IN), the two rods 4a come closer (rotating in the direction indicated by the arrows R2) and the bag A closes to be pulled out and removed from the two rods 4a (in the direction indicated by the arrow EXT).

At this point, the device 1 returns to the configuration shown in position a) of figure 3 and is ready for use again.

The present invention achieves the proposed objects by overcoming the drawbacks of the prior art and by providing the user with a practical and effective device 1 that greatly improves the daily experience of collecting animal waste from one's pet, and an efficient and environmentally friendly kit 100.

## Claims

1. A device (1) for collecting animal waste comprising:
- a linearly extending kinematic mechanism (2) extending between a first end portion (2a) and a second end portion (2b) opposite to each other, and configured to move between a retracted configuration, in which the first end portion (2a) and the second end portion (2b) are in a proximal position, and an extended configuration, in which the first end portion (2a) and the second end portion (2b) are in a distal position;
- an actuating handle (3) connected to the first end portion (2a) and configured to actuate the linearly extending kinematic mechanism (2) in a reversible manner between the retracted configuration and the extended configuration, and vice versa,
- retaining means (4) configured to retain a bag (A) adapted to receive the animal waste, said linearly extending kinematic mechanism (2) being configured to arrange, in the extended configuration, said retaining means (4) at the animal's anal area so that the bag (A) can receive the animal waste;
**characterized in that** the device further comprises an opening and closing mechanism (5) of the bag (A) interposed between the second end portion (2b) of the linearly extending kinematic mechanism (2) and the retaining means (4) and configured to switch the retaining means (4) reversibly between
a resting configuration, in which the bag (A) is substantially closed during the retracted configuration of the linearly extending kinematic mechanism (2), and
an operating configuration, in which the bag (A) is opened during the extended configuration of the linearly extending kinematic mechanism (2);
wherein said linearly extending kinematic mechanism (2) comprises a sequence of arms (2') hinged to one another and being mutually rotatable to implement a pantograph-type mechanism.

2. A device (1) according to claim 1, wherein said actuating handle (3) comprises two gripping portions (3a) hinged to each other and which can be spaced apart to switch the linearly extending kinematic mechanism (2) between the retracted configuration and the extended configuration, and which can be approached to switch the linearly extending kinematic mechanism (2) between the extended configuration and the retracted configuration.

3. A device (1) according to claim 2, wherein said actuating handle (3) comprises a spring (6) configured to oppose the separation of the two gripping portions (3a) and to approach again the two gripping portions (3a) to each other.

4. A device (1) according to claim 3, wherein said spring (6) is either interposed to connect the two gripping portions (3a) or is a torsional type spring arranged at a connecting hinge (3c) of the two gripping portions (3a).

5. A device (1) according to claim 3 or 4, wherein said actuating handle (3) comprises a safety hook (3d) which is reversibly switchable between a locking position, in which it prevents the mutual separation of the two gripping portions (3a), and an unlocking position, in which the separation and approaching of the two gripping portions (3a) are allowed.

6. A device (1) according to one or more of the preceding claims, wherein said retaining means (4) comprise two rods (4a), connected to the opening and closing mechanism (5), which can be mutually spaced apart to implement the operating configuration and mutually approached to implement the resting configuration, said bag (A) being adapted to be fitted onto said rods (4a).

7. A device (1) according to claim 6, wherein said opening and closing mechanism (5) comprises two arms (5a) hinged and connected, on one side, to the two rods (4a) of the retaining means (4), and on the other side, to the sequence of arms (2') of the linearly extending kinematic mechanism (2), respectively.

8. A device (1) according to one or more of the preceding claims, wherein the first end portion (2a) and the second end portion (2b) are arranged at a minimum distance having a value between 8 cm and 30 cm, preferably equal to 26 cm, in the retracted configuration, and wherein the first end portion (2a) and the second end portion (2b) are arranged at a maximum distance having a value between 65 cm and 95 cm, preferably equal to 82 cm, in the extended configuration.

9. A device (1) according to one or more of the preceding claims, comprising a case (7) adapted to receive therein at least the linearly extending kinematic mechanism (2) in the retracted configuration, the opening and closing mechanism (5), and the retaining means (4) in the resting configuration; said case (7) externally having at least one hooking element (7a) configured to hook onto a garment or a leash.

10. A kit (100) for collecting animal waste, comprising a device (1) according to one or more of the preceding claims and at least one bag (A) made of a biodegradable or compostable material comprising a coupling portion (A') configured to be coupled to said retaining means (4) of the device (1).

## Patentansprüche

1. Vorrichtung (1) zum Sammeln von tierischem Abfall, umfassend:
- einen sich linear erstreckenden kinematischen Mechanismus (2), der sich zwischen einem ersten Endabschnitt (2a) und einem zweiten Endabschnitt (2b), die gegenständig zueinander angeordnet sind, erstreckt und ausgelegt ist, um sich zwischen einer eingefahrenen Auslegung, in der sich der erste Endabschnitt (2a) und der zweite Endabschnitt (2b) in einer nahen Position befinden, und einer ausgefahrenen Auslegung, in der sich der erste Endabschnitt (2a) und der zweite Endabschnitt (2b) in einer entfernten Position befinden, zu bewegen;
- ein Betätigungshandgriff (3), der mit dem ersten Endabschnitt (2a) verbunden und ausgelegt ist, um den sich linear erstreckenden kinematischen Mechanismus (2) reversibel zwischen der eingefahrenen Auslegung und der ausgefahrenen Auslegung und umgekehrt zu betätigen;
- Rückhaltemittel (4), die ausgelegt sind, um einen Beutel (A) zu halten, der dazu geeignet ist, tierischen Abfall aufzunehmen, wobei der sich linear erstreckende kinematische Mechanismus (2) ausgelegt ist, um die Rückhaltemittel (4) in der ausgefahrenen Auslegung an der Analregion des Tiers anzuordnen, sodass der Beutel (A) den tierischen Abfall aufnehmen kann,
**dadurch gekennzeichnet, dass** die Vorrichtung zudem einen Mechanismus zum Öffnen und Schließen (5) des Beutels (A) umfasst, der zwischen dem zweiten Endabschnitt (2b) des sich linear erstreckenden kinematischen Mechanismus (2) und den Rückhaltemitteln (4) angeordnet und ausgelegt ist, um die Rückhaltemittel (4) reversibel zwischen
einer Ruheauslegung, in der der Beutel (A) im Wesentlichen während der eingefahrenen Auslegung des sich linear erstreckenden kinematischen Mechanismus (2) geschlossen ist, und
einer Betriebsauslegung, in der der Beutel (A) während der ausgefahrenen Auslegung des sich linear erstreckenden kinematischen Mechanismus (2) geöffnet ist, umzuschalten,
wobei der sich linear erstreckende kinematische Mechanismus (2) eine Abfolge von Armen (2') umfasst, die aneinander angelenkt und gegenseitig drehbar sind, um einen Mechanismus vom Pantografentyp zu implementieren.

2. Vorrichtung (1) nach Anspruch 1, wobei der Betätigungshandgriff (3) zwei Greifabschnitte (3a) umfasst, die aneinander angelenkt sind und beabstandet werden können, um den sich linear erstreckenden kinematischen Mechanismus (2) zwischen der eingefahrenen Auslegung und der ausgefahrenen Auslegung umzuschalten, und die angenähert werden können, um den sich linearen erstreckenden kinematischen Mechanismus (2) zwischen der ausgefahrenen Auslegung und der eingefahrenen Auslegung umzuschalten.

3. Vorrichtung (1) nach Anspruch 2, wobei der Betätigungshandgriff (3) eine Feder (6) umfasst, die ausgelegt ist, um der Trennung der beiden Greifabschnitte (3a) entgegenzuwirken und die beiden Greifabschnitte (3a) wieder einander anzunähern.

4. Vorrichtung (1) nach Anspruch 3, wobei die Feder (6) entweder eingesetzt ist, um die beiden Greifabschnitte (3a) zu verbinden, oder eine Feder vom Torsionstyp ist, die an einem Verbindungsgelenk (3c) der beiden Greifabschnitte (3a) angeordnet ist.

5. Vorrichtung (1) nach Anspruch 3 oder 4, wobei der Betätigungshandgriff (3) einen Sicherheitshaken (3d) umfasst, der reversierbar zwischen einer Verriegelungsposition, in der er die gegenseitige Trennung der beiden Greifabschnitte (3a) vermeidet, und einer Entriegelungsposition, in der die Trennung und das Annähern der beiden Greifabschnitte (3a) erlaubt sind, umschaltbar ist.

6. Vorrichtung (1) nach einem oder mehreren der vorhergehenden Ansprüche, wobei die Rückhaltemittel (4) zwei Stäbe (4a) umfassen, die mit dem Öffnungs- und Schließmechanismus (5) verbunden sind, die gegenseitig beabstandet werden können, um die Betriebsauslegung zu implementieren, und gegenseitig angenähert werden können, um die Ruheauslegung zu implementieren, wobei der Beutel (A) dazu geeignet ist, auf die Stäbe (4a) aufgezogen zu werden.

7. Vorrichtung (1) nach Anspruch 6, wobei der Öffnungs- und Schließmechanismus (5) zwei Arme (5a) umfasst, die auf einer Seite jeweils an die beiden Stäbe (4a) der Rückhaltemittel (4) und auf der anderen Seite an die Abfolge von Armen (2') des sich linear erstreckenden kinematischen Mechanismus (2) angelenkt und damit verbunden sind.

8. Vorrichtung (1) nach einem oder mehreren der vorhergehenden Ansprüche, wobei der erste Endabschnitt (2a) und der zweite Endabschnitt (2b) in einem Mindestabstand, aufweisend einen Wert zwischen 8 cm und 30 cm, vorzugsweise gleich 26 cm, in der eingefahrenen Auslegung angeordnet sind, und wobei der erste Endabschnitt (2a) und der zweite Endabschnitt (2b) an einem maximalen Abstand, aufweisend einen Wert zwischen 65 cm und 95 cm, vorzugsweise gleich 82 cm, in der ausgefahrenen Auslegung angeordnet sind.

9. Vorrichtung (1) nach einem oder mehreren der vorhergehenden Ansprüche, umfassend ein Gehäuse (7), das dazu geeignet ist, darin mindestens den sich linear erstreckenden kinematischen Mechanismus (2) in der eingefahrenen Auslegung, den Öffnungs- und Schließmechanismus (5) und die Rückhaltemittel (4) in der Ruheauslegung aufzunehmen, wobei das Gehäuse (7) außenseitig mindestens ein Hakenelement (7a) aufweist, das ausgelegt ist, um an einem Kleidungsstück oder einer Leine angehakt zu werden.

10. Kit (100) zum Sammeln von tierischem Abfall, umfassend eine Vorrichtung (1) nach einem oder mehreren der vorhergehenden Ansprüche und mindestens einen Beutel (A), der aus einem biologisch abbaubaren oder kompostierbaren Material besteht, umfassend einen Kupplungsabschnitt (A'), der ausgelegt ist, um mit den Rückhaltemitteln (4) der Vorrichtung (1) gekuppelt zu werden.

## Revendications

1. Dispositif (1) de collecte des déchets animaux, comprenant :
- un mécanisme cinématique (2) s'étendant linéairement s'étendant entre une première portion d'extrémité (2a) et une seconde portion d'extrémité (2b) opposées l'une à l'autre, et configuré pour se déplacer entre une configuration rétractée, dans laquelle la première portion d'extrémité (2a) et la seconde portion d'extrémité (2b) sont dans une position proximale, et une configuration étendue, dans laquelle la première portion d'extrémité (2a) et la seconde portion d'extrémité (2b) sont dans une position distale ;
- une poignée d'actionnement (3) reliée à la première portion d'extrémité (2a) et configurée pour actionner le mécanisme cinématique (2) s'étendant linéairement de manière réversible entre la configuration rétractée et la configuration étendue, et vice versa,
- des moyens de retenue (4) configurés pour retenir un sac (A) adapté pour recevoir les déchets animaux, ledit mécanisme cinématique (2) s'étendant linéairement étant configuré pour agencer, dans la configuration étendue, lesdits moyens de retenue (4) au niveau de la zone anale de l'animal afin que le sac (A) puisse recevoir les déchets animaux ;
**caractérisé en ce que** le dispositif comprend en outre un mécanisme d'ouverture et de fermeture (5) du sac (A) interposé entre la seconde portion d'extrémité (2b) du mécanisme cinématique (2) s'étendant linéairement et les moyens de retenue (4) et configuré pour commuter les moyens de retenue (4) de manière réversible entre
une configuration de repos, dans laquelle le sac (A) est sensiblement fermé pendant la configuration rétractée du mécanisme cinématique (2) s'étendant linéairement, et
une configuration de fonctionnement, dans laquelle le sac (A) est ouvert pendant la configuration étendue du mécanisme cinématique (2) s'étendant linéairement ;
dans lequel ledit mécanisme cinématique (2) s'étendant linéairement comprend une séquence de bras (2') articulés les uns aux autres et pouvant tourner mutuellement pour mettre en œuvre un mécanisme de type pantographe.

2. Dispositif (1) selon la revendication 1, dans lequel ladite poignée d'actionnement (3) comprend deux portions de préhension (3a) articulées l'une à l'autre et qui peuvent être espacées pour commuter le mécanisme cinématique (2) s'étendant linéairement entre la configuration rétractée et la configuration étendue, et qui peuvent être approchées pour commuter le mécanisme cinématique (2) s'étendant linéairement entre la configuration étendue et la configuration rétractée.

3. Dispositif (1) selon la revendication 2, dans lequel ladite poignée d'actionnement (3) comprend un ressort (6) configuré pour s'opposer à la séparation des deux portions de préhension (3a) et pour rapprocher à nouveau les deux portions de préhension (3a) l'une de l'autre.

4. Dispositif (1) selon la revendication 3, dans lequel ledit ressort (6) est soit interposé pour relier les deux portions de préhension (3a), est soit un ressort de type torsionnel agencé au niveau d'une charnière de liaison (3c) des deux portions de préhension (3a).

5. Dispositif (1) selon la revendication 3 ou 4, dans lequel ladite poignée d'actionnement (3) comprend un crochet de sécurité (3d) qui est commutable de manière réversible entre une position de verrouillage, dans laquelle il empêche la séparation mutuelle des deux portions de préhension (3a), et une position de déverrouillage, dans laquelle la séparation et l'approche des deux portions de préhension (3a) sont autorisées.

6. Dispositif (1) selon une ou plusieurs des revendications précédentes, dans lequel lesdits moyens de retenue (4) comprennent deux tiges (4a), reliées au mécanisme d'ouverture et de fermeture (5), qui peuvent être mutuellement espacées pour mettre en œuvre la configuration de fonctionnement et mutuellement rapprochées pour mettre en œuvre la configuration de repos, ledit sac (A) étant adapté pour être ajusté sur lesdites tiges (4a).

7. Dispositif (1) selon la revendication 6, dans lequel ledit mécanisme d'ouverture et de fermeture (5) comprend deux bras (5a) articulés et reliés, d'un côté, aux deux tiges (4a) des moyens de retenue (4), et de l'autre côté, à la séquence de bras (2') du mécanisme cinématique (2) s'étendant linéairement, respectivement.

8. Dispositif (1) selon une ou plusieurs des revendications précédentes, dans lequel la première portion d'extrémité (2a) et la seconde portion d'extrémité (2b) sont agencées à une distance minimale ayant une valeur comprise entre 8 cm et 30 cm, de préférence égale à 26 cm, dans la configuration rétractée, et dans lequel la première portion d'extrémité (2a) et la seconde portion d'extrémité (2b) sont agencées à une distance maximale ayant une valeur comprise entre 65 cm et 95 cm, de préférence égale à 82 cm, dans la configuration étendue.

9. Dispositif (1) selon une ou plusieurs des revendications précédentes, comprenant un boîtier (7) adapté pour recevoir à l'intérieur au moins le mécanisme cinématique (2) s'étendant linéairement dans la configuration rétractée, le mécanisme d'ouverture et de fermeture (5) et les moyens de retenue (4) dans la configuration de repos ; ledit boîtier (7) ayant extérieurement au moins un élément d'accrochage (7a) configuré pour s'accrocher à un vêtement ou à une laisse.

10. Kit (100) de collecte des déchets animaux, comprenant un dispositif (1) selon une ou plusieurs des revendications précédentes et au moins un sac (A) fait d'un matériau biodégradable ou compostable comprenant une portion de couplage (A') configurée pour être couplée auxdits moyens de retenue (4) du dispositif (1).
